# EUROPEAN PATENT APPLICATION

(11) **EP 4 431 468 A1**
(43) Date of publication of application: **18.09.2024**
(21) Application number: 24162296.8
(22) Date of filing: 08.03.2024
(51) Int. Cl.: C02F 11/128, C02F 11/147, F26B 5/00, F26B 5/12

(54) **DEWATERING SYSTEM AND METHOD**

(30) Priority: 13.03.2023 FI 20235291
(71) Applicant: Arman Oy, 02280 Espoo (FI)
(72) Inventor: Palolahti, Anton, 02280 Espoo (FI)
(74) Representative: Kolster Oy Ab

(57) **Abstract**

The present invention relates to a method of dewatering a sediment material comprising mixing the material with one or more flocculant to flocculate one or component of the material. The method comprises depositing the material in an airtight vessel; and reducing air pressure within the vessel to extract fluid from the vessel and dewater the material.

## Description

The present disclosure relates to a dewatering or drying system and method thereof, in particular, but not limited to, dewatering dredged sediment.

### Background of the Invention

Dewatering is used to dewater or otherwise dry material extracted from submerged or wet sources. Typically, this material comprises sediment dredged from bodies of water, such as canal, lakes, rivers, mine tailing ponds, reservoirs or oceans. In order to further process the material, for example, to remove contamination, use in energy production or recovery of valuable materials, the material must be dried. The material must be dried to a higher solid content than mechanical or passives methods can typically achieve. A prior art dewatering system is shown in WO 2008/073134. The document discloses placing wet sediment into a permeable enclosure and using vacuum pressure to extract water.

The inventor has found numerous problems with the prior art solution. It has been found that during the vacuum process, fine sediment may build up and clog the porous enclosure or other medium used to filter the extracted water. This increases the vacuum pressure required to provide consistent efficacy, increasing energy usage and costs. Additionally, the extracted water may contain harmful contaminants, which require further processing.

Other prior art methods using oven heating to reduce water content. Such processes are energy intensive, and therefore may be costly.

The present invention aims to overcome or ameliorate one or more of the above problems.

### Statement of Invention

According to a first aspect, there is provided: a method of dewatering a material comprising: mixing the material with one or more flocculant to flocculate one or component of the material; depositing the material in an airtight vessel; and reducing air pressure within the vessel to extract fluid from the vessel and dewater the material.

A vacuum or near vacuum may be provided in the vessel to provide dewatering. The material may comprise a sediment material.

The method may comprise depositing the material in a porous/permeable casing within the vessel. The porous casing may comprise a polymeric material. The porous casing may comprise a geotextile. The porous casing may comprise polypropylene. The porous casing may comprise a textile. The casing may at least partially retain or filter said flocculated component therein.

The method may comprise dewatering the material in the porous casing via gravity. The gravity dewatering may be performed before reducing the pressure. The vessel may comprise a drainage channel. The drainage channel may allow outflow of fluid during the gravity dewatering. Gravity dewatering may be performed until the material comprises a water fraction of less than or equal to 80wt%.

The vessel may at least partially comprise a flexible vessel (i.e. one or more portion of the vessel may be flexible). The vessel may comprise a flexible sheet, cover or casing. The vessel may comprise a flexible bag, pouch or sleeve.

The material may be deposited on a first portion of the vessel, and a second portion of the vessel is deposited on the material and sealed to the first portion in a gastight manner. The first and second portion may be welded or heat sealed together. The vessel may comprise an air impermeable liner. The first portion may comprise the liner.

The flocculant may comprise a polymer based flocculant. The flocculant may comprise polyacrylamide (PAM) based flocculant. The flocculant may comprise polyacrylamide (PAM) copolymers. The flocculant may comprise a flocculant configured to remove metals. The flocculant may comprise sodium dimethyldithiocarbamate.

The method may comprise providing one or more drainage channel. The channel(s) may extend through or be surrounded by the material. The channel(s) may be provided between casings. The channel(s) may be provided in spaces, gaps or interstices between casings. The channels may be operatively connected to a pump to provide said reduction of pressure. The channels may form a network. The channels may be fluidly connected via a manifold. The channels may be branched.

At least one of channels may comprise a core defining a drainage channel, and an outer layer comprising porous filter material. The outer layer may comprise a fabric.

The material may dried to comprise a water fraction less than or equal to less than or equal to 70wt%; preferably, less than or equal to 60wt%.

The flocculant may be mixed with the material using a static mixer. The flocculant may be dispensed using a dosing mechanism or unit.

The pressure in vessel may be reduced by between 30kPa and 100Kpa; preferably, between 50kPa and 90kPa. The vessel may apply a compressive force on the material. The compressive force may be 10kPa and 50kPa. The pump may comprise vacuum pump.

The vessel may at least partially comprise a rigid vessel. The vessel may comprise a metallic or polymeric container. A flexible membrane, sheet or cover may be sealed to the rigid vessel to provide a gastight vessel. The vessel may comprise a roll off box. The vessel may comprise one or more of: a pond; pit; reservoir, or ditch. The vessel may comprise an embankment, berm or barrier.

The material may comprise biomass (e.g. peat). The material may be dewatered to provide a biofuel. The material may comprise ore.

According to further aspect there is provided: a system for dewatering a material comprising: a mixer to mix the material with one or more flocculant to flocculate one or component of the material; an airtight vessel configured to receive deposited material; and an air pump configured to reduce air pressure within the vessel to extract fluid from the vessel and dewater the material.

Any aspect of the invention may be combined with any other aspect of the invention where practicable.

### Detailed Description

Embodiments of the present invention are described below, by way of example only, with reference to the accompanying drawings:
**Figure 1** is a schematic view of a first embodiment of a dewatering system;
**Figure 2A** is a schematic view of a first stage of a dewatering process;
**Figure 2B** is a schematic view of a second stage of a dewatering process;
**Figure 3** is a schematic view of a second embodiment of a dewatering system;

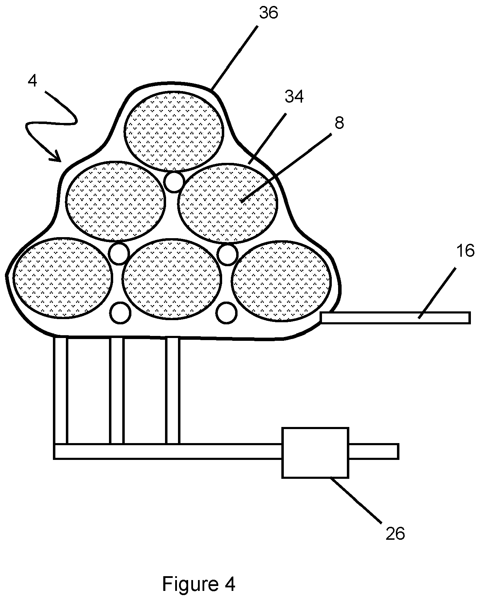

**Figure 4** is a schematic view of a third embodiment of a dewatering system;

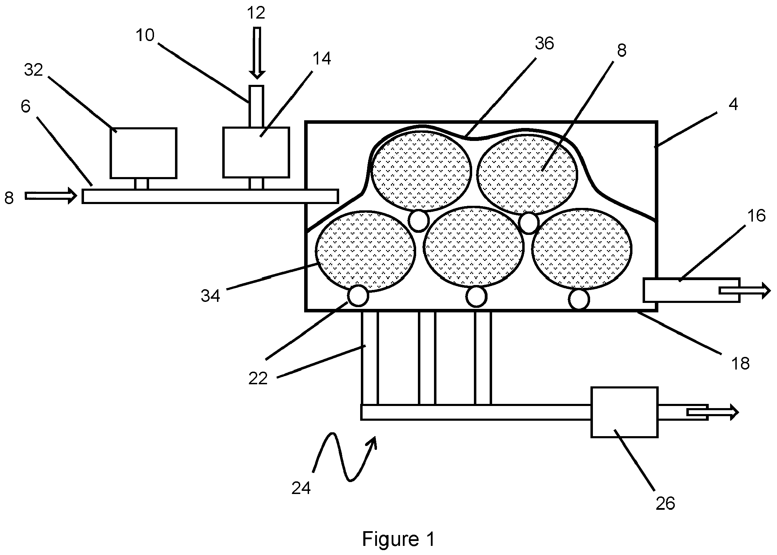

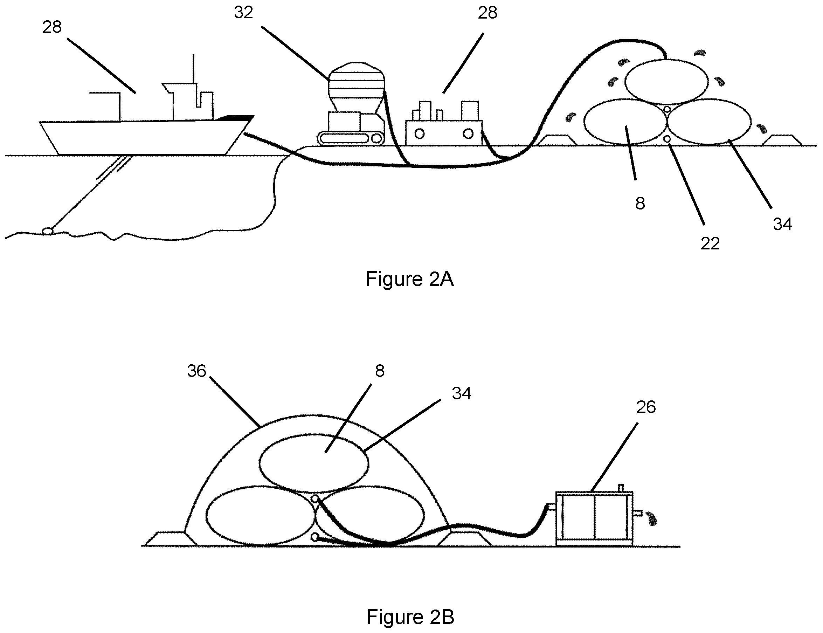

A dewatering system 2 is shown in figure 2. The system 2 comprises a dewatering vessel 4. The vessel 4 comprises a substantially air impermeable (i.e. airtight) container. For example, the vessel 4 may comprises a metal, plastic or composite container. Typically, the vessel 4 is rigid to allow easier transportation. In the embodiment in figure 1, the vessel 4 comprises a "roll-off box". Such boxes are configured to transported via a lorry or other vehicle. The box may comprise a volume of between 10 and 40 cubic meters.

In other embodiments, the vessel may comprise any suitable solid container, for example: an ISO container; barge or other ship; trailer; skip; drum; silo; or bin.

A material input 6 is configured to deposit sediment material 8 into the vessel 4. Given the wet nature of the material 8 (i.e. slurry), the input typically comprises a pipe or hose. It can be appreciated that any suitable means can be used, depending on the form of the sediment, such as conveyors, screws, buckets or chutes etc. The input 6 is operatively connected to a pump or other mean to propel the material 8. The pump may comprise a pressure feeder or could be directly connected to a dredging mechanism. Alternatively, material 8 may flow under the action of the gravity.

A second input 10 is provided to deposit one or more flocculant 12 into the inflowing sediment 8. Again, the specific form of the input 10 is not pertinent to the invention as hand. The second input 10 may comprise a dosing mechanism to ensure the appropriate amount or flow rate flocculant is provided in the sediment. The dosing mechanism may deposit flocculant in accordance with the flow rate of the sediment to ensure to consistent deposition therein (i.e. sediment and flocculant are synchronized). In other embodiments, flocculant may be added manually according to a predetermined schedule.

The flocculant is configured flocculate or aggregate suspended particles in the water to form solid or semi-solid material. The mechanism of said action is known and will be not be described in detail. The flocculant may comprise a polymeric flocculant. The flocculant may comprise a polyolefin flocculant. The flocculant may comprise polyacrylamide (PAM) based flocculant (i.e. comprising polyacrylamide and/or copolymers thereof). The polymers may be charged (e.g. comprise cationic groups). Charged group may be provided by trivalent metals, for example, ferric chloride or aluminum chloride. The flocculant may be provided in dry (e.g. granular or powder), emulsion or liquid form.

In optional embodiments, a mineral-based flocculant may be used. Such flocculants may flocculate metals. The flocculant may comprise sodium dimethyldithiocarbamate.

A mixer 14 is provided downstream of the flocculant input 12. The mixer 14 is configured to mix the flocculant 12 and the sediment 8 together to increase the homogeneity thereof. The mixer 14 may comprise a static mixer. For example, the mixer may comprise convolutions, vanes or other surfaces configured to induce a mixing turbulence into the fluid stream.

The vessel 4 comprises a drainage outlet 16. The drainage outlet 16 is configured to provided gravity drainage in use. The outlet 16 is therefore provided at a lower end or bottom 18 of the vessel 4. The drainage outlet 16 may comprise a pump or like to move water exiting the outlet 16. The pump however, substantially no suction force within the vessel 4 or outlet 16.

A vacuum or suction system 20 is provided to extract water from the vessel. The vacuum system 20 comprises a plurality of channels 22 configured to be provided within the vessel 4 in use. In figure 1, the channels 22 are shown as extending horizontally in use (i.e. in/out of the plane of the page). However, the channels may extend is any suitable position or orientation (e.g. vertically, diagonally, circuitously etc). The channels 22 are fluidly connected to allow collection of fluid therefrom. The channels 22 thus form a network or the like. The channels 22 may be connected via a manifold 24 the like. The manifold 24 is typically provided outside the vessel to avoid damage thereto. However, it can be appreciated the manifold 24 may be provided in any suitable location, such as inside the vessel 4 or a compartment thereof. The manifold 24 is operatively connected to a vacuum pump 26. The vacuum pump 26 can therefore draw a vacuum through the channels 22.

The channels 22 are water permeable. This may be provided by any suitable arrangement. For example, the channels 22 may be perforated, partially open, or comprise a porous material. The channels 22 may comprise a pipe or hose. The channels 22 may comprise filters or grating to prevent solid material passing thereinto. Similar filters may be provided in the manifold 24 and/or in the vacuum pump 26.

In the present embodiment, the channels 22 comprises a hollow core to provide drainage. The core may comprise a composite or polymer material. An outer layer or sheath is provided on the core. In some embodiments, the core may comprise a plate or sheet like arrangement. A plurality of axial ridges or ribs provide respective drainage channel. The channels 22 are thus ribbon like. The outer layer comprises a porous material. The outer layer comprises a woven or non-woven fabric. The outer layer thus provides a filter.

The number, orientation, shape, or configuration of the channels 22 may be adjusted accordingly the shape/size/mass of the material within the vessel. For example, a single channel 22 may be provided for a suitably small material load. In some embodiments, the channels 22 may terminate at the edge of the vessel (i.e. they do protrude thereinto). The channels 22 may open into the bottom surface 18. Multiple channel 22 networks with respective vacuum pumps 26 may be provided, depending on the size of the material to be dewatered.

### Operation of the system

Operation of the system is described with reference to figures 2A and 2B. First, material is dredged and otherwise extracted using conventional means. In the present embodiment, this is performed via a dredging ship or platform 28. The material is pumped or otherwise fed to the input 6. The process is substantially continuous. At this stage the material is typically greater than 90wt% water, typically 95wt%. Where dredging is remote, the material may than be transported to dewatering apparatus 2. An additional pump unit 30 may help fed the sediment material 8 into the vessel 4.

The flocculant dosage, type or other characteristics thereof are determined in accordance with amount and type of material (e.g. chemical composition, contamination level, water weight fraction). The flocculant 12 is added using into the flowing material 8 a dosing mechanism 32 via the flocculant input 10 The flocculant 12 and the material 8 are mixed in the mixer 14 to provide a homogenous mix. During/after the mixing step, suspended particles flocculate to form solid or semi-solid particulate.

In present embodiment, the material 8 is contained within a porous/permeable casing or container 34. The porous casing 34 holds the material 8 whilst allowing easier manipulation thereof and further increases the effective surface area to aid with dewatering. The casings 34 additionally help to filter material from the water, in particular, the flocculated solids. The porous casing comprises a woven, lattice or grid like structure to allow water or other liquids to pass through. The casing 34 may comprise geotextile. The porous casing 34 comprises a flexible vessel, such as a bag or sack. The size of the effective pores may be determined in accordance with the desired level of filtration and dewatering rate. Generally, the casings 34 are filled one at a time and then closed once full.

In some embodiments, the casing 34 comprise polypropylene. The casing 34 comprises polypropylene yarns in woven structure. The polypropylene yarns comprise a high strength-weight ratio (i.e. tenacity).

The flocculant increases the effective particle size of matter in the material, allowing greater fluid flow through the casing 34 and therefore reduces clogging of the casing (i.e. as less fine sludge is formed). The inventor has found that specific combination of a polymeric textile in combination with a polymeric flocculant provides improved filtration with reduced clogging. In particular, said benefit is found with a polyacrylamide flocculant and polypropylene casing.

The casings 34 may be stacked or otherwise fill the vessel 4 as necessary. The casings 34 comprise a generally elongate or cylindrical (i.e. tubular) form. Respective channels 22 may laid beneath, on top of and/or beneath the casings 34. The channels 22 may be provided in the spaces/interstices between the casings 34. This help to ensure an even distribution of the channel 22 network.

It can be appreciated that the size, shape and distribution of the casings 34 is determined accordingly to size, type etc. of the material and the desired dewatering level, and the arrangement shown in figure 1 is merely exemplary. In some embodiments, the casing 34 may not be provided (i.e. the material directly contacts the vessel 4), and filters or the like may be used to aid with filtration of the extracted water.

In the next step, dewatering is performed under the action of gravity. Water seeps from the casings 34 and out the drainage outlet 16. This process is maintained for a period of time until a desired water weight fraction is achieved, for example 80%. Again, the exact period of the time and water weight fraction is determined according to one or more characteristic of the material 8. Typically, the process requires between 1 and 50 days.

In the next step shown in figure 2B, the vessel 4 is sealed to provide an airtight or near airtight arrangement. For example, a closure or cover 36 is places on the vessel. The material input 8 and drainage outlet 16 may be removed and/or sealed. In the present embodiments, the cover 36 comprises an air impermeable membrane. The membrane 36 is flexible/non-rigid. The membrane 36 comprises a polymeric material. The membrane 36 may comprise HDPE. The membrane may be 1-2mm thick. The membrane 36 may comprise welded seams. The membrane 36 is sealed or otherwise fixed to the vessel 4 to provide an airtight seal therebetween. The flexible membrane 36 aids with compression of the material in the vacuum step.

In some embodiments, the closure or cover 36 may be rigid. The closure 36 may therefore provide little compressive force. However, dewatering may still occur dues to boiling of the water under reduced pressure and reduction of the water vapour pressure within the vessel.

In embodiments where, the sediment or sludge forms air tight layer, then membrane 36 may not needed, as the material sludge itself provides a vacuum tight layer (e.g. until the layer cracks).

The vacuum pump 26 is activated and water is further drawn out from the material 8. This process is repeated until a desired water fraction is reached. Said water fraction may be less than or equal to 80wt%; preferably, less than or equal to 70wt%; preferably, less than or equal to 60wt%; preferably, less than or equal to 50wt%; preferably, less than or equal to 40wt%; preferably, less than or equal to 35%. The water fraction may be between 25wt% and 65wt%. Typically the process is completed in between 2 and 50 days.

The water content may be dependent on the content type. For example, for organic sludge, the dewatered water fraction may be between 25% and 65%. For inorganic sludge, the dewatered water fraction may be between 10% and 60%.

The vacuum pressure is determined according to the material 8 characteristics and a desired dewatering level or time. The vacuum pressure is between 30kPa and 100Kpa; preferably, between 50kPa and 90kPa. The pressure in the vessel 4 is therefore preferably between 50kPa and 10kPa. Such pressures are equivalent to 3-5m of top soil covering the vessel 4.

Once the dewatering process is completed, the casings 34 are removed, and transported to a desired location. The material 8 may be extracted from the membranes 34 as required.

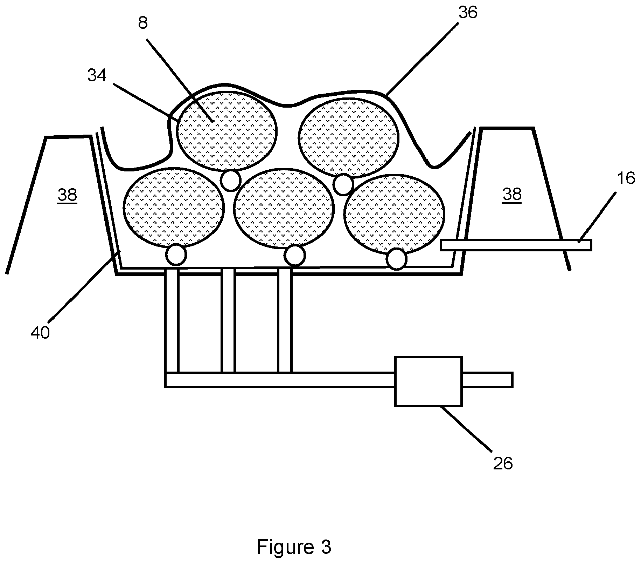

A second embodiments of the system 2 is shown in figure 3. In this embodiment, the vessel 4 comprises a pit, pool, pond, reservoir, ditch or other geological structure. Such structures allow processing of large quantities of material, for example, over 100,000 tons thereof. The vessel 4 comprises embankments 38 to form effective side walls. The embankment 38 may comprise a soil berm. A liner 40 lines the pit 4 to provide an airtight/watertight arrangement. The liner 40 may comprise the same material as the cover membrane 36.

The cover membrane 36 is sealed to the liner 40 to collectively form a two-part airtight vessel. The cover membrane 36 and liner 40 may be attached in a permanent fashion, for example, using welding or heat sealing. Alternatively, the cover membrane 36 and liner 40 may be attached via a clamp etc.

In other embodiments, the liner 40 and membrane 36 may comprise a single or prefabricated unit (e.g. to provide a bag, pouch or sleeve). The material 8 may therefore be deposited directly into the unit, and then sealed during the vacuum dewatering process. However, it can be appreciated that the two-part airtight arrangement allows easier handling for large volumes.

A third embodiment is shown in figure 3. In this embodiment, the material is simply stacked or piled. Embankments or other suitable barriers 38 may help prevent lateral movement. It can be appreciated barriers or other retaining walls may not be provided where the material 8 has sufficient lateral stability. Thus, the vessel 4 may merely be provided by the cover membrane 36 and liner 40 (in either one-part or two-part configuration).

The present dewatering method may be used dewater or otherwise dry any suitable sediment material. The sediment material may comprise one or more of: river, sea, waterway or lake bed material (e.g. sand, soil, mud, silt, clay or other geological sediment); tailings (e.g. waste from mining, ore processing, or other industry); biomass or organic material (e.g. peat); and/or contaminated waterflow (e.g. with sewerage, industrial waste, heavy metals etc.). The material comprises a sludge or slurry.

In a specific embodiment, the sediment material comprises peat or other biofuel. The peat/biofuel is dried and then combusted to generate energy (e.g. electricity or heat). In a specific embodiment, the material may comprise ore (e.g. mining ore). The material may be dewatered to provide valuable metals or REE (Rear Earth Elements).

In some embodiments, vacuum dewatering may be performed concurrently to gravity dewatering, or gravity dewatering may not be performed at all. However, it can be appreciated that gravity dewatering requires little to no energy input, and so provision thereof is typically beneficial. In some embodiments, the gravity dewatering may be formed inside the airtight container.

It can be appreciated that the vessel 4 need not a be perfectly airtight, provided that the vacuum pump can draw a useable pressure. However, generally, the more airtight the vessel 4, the more effective and less energy intensive the process becomes.

The present method allows dewatering of sediment material in an energy efficient manner. Additionally, the method can dewater in significantly better than gravitational filtration alone. For example, to achieve the same water fraction using gravity alone would take several years compared to days or week using the present method. The method allows recovery of biofuel or ore material in an economical manner. Dewatering may also reduce transport burden (i.e. less water is transported).

The present method also helps to prevent clogging of one or more filter or other water separation element of the dewatering system, this increasing efficacy and reducing the time required for the process.

## Claims

1. A method of dewatering a sediment material (8) comprising:
mixing the material (8) with one or more flocculant (12) to flocculate one or component of the material (8);
depositing the material in an airtight vessel (4); and
reducing air pressure within the vessel (4) to extract fluid from the vessel (4) and dewater the material (8).

2. A method according to claim 1, comprising:
depositing the material (8) in a porous casing (34) within the vessel (4) to at least partially retain said flocculated component therein.

3. A method according to claim 2, where the porous casing (34) comprises a polymeric textile, preferably, a polypropylene textile.

4. A method according to claim 2 or 3, comprising dewatering the material (8) in the porous casing (34) via gravity before reducing the pressure.

5. A method according to any preceding claim, where the vessel (4) at least partially comprises a flexible vessel.

6. A method according to any preceding claim, where the material (8) is deposited on a first portion (40) of the vessel (4), and a second portion (36) of the vessel (4) is deposited on the material (8) and sealed to the first portion (40) in a gastight manner.

7. A method according to any preceding claim, where the flocculant comprises a polymer based flocculant, preferably, a polyacrylamide (PAM) based flocculant.

8. A method according to any preceding claim, providing a network of drainage channels (22), the channels (22) extending through or surrounded by the material (8) and operatively connected to a pump (26) to provide said reduction of pressure.

9. A method according to claim 8, where at least one of channels (22) comprises:
a core defining a drainage channel, and
an outer layer comprising porous filter material.

10. A method according to any preceding claim, where the material (8) is dried to comprise a water fraction less than or equal to less than or equal to 70wt%; preferably, less than or equal to 60wt%.

11. A method according to any preceding claim, where the flocculant is mixed with the material (8) using a static mixer (14).

12. A method according to any preceding claim, where the vessel (4) at least partially comprises a rigid vessel.

13. A method according to claim 12, where the vessel (4) comprises a metallic or polymeric container.

14. A method according to any preceding claim, where the material (8) comprises biomass, and the material (8) is dewatered to provide a biofuel.

15. A system for dewatering a sediment material comprising:
a mixer (14) to mix the material (8) with one or more flocculant to flocculate one or component of the material;
an airtight vessel (4) configured to receive deposited material (8); and
an air pump (26) configured to reduce air pressure within the vessel (4) to extract fluid from the vessel and dewater the material (8).
